# EUROPÄISCHE PATENTANMELDUNG

(11) **EP 3 300 599 A1**
(43) Veröffentlichungstag der Anmeldung: **04.04.2018**
(21) Anmeldenummer: 17181033.6
(22) Anmeldetag: 12.07.2017
(51) Int. Cl.: A01M 21/04

(54) **VORRICHTUNG UND VERFAHREN ZUR BEIKRAUTKONTROLLE**

(30) Priorität: 27.09.2016 DE 102016218624
(71) Anmelder: Lechler GmbH, 72555 Metzingen (DE)
(72) Erfinder: Bahnmüller, Andreas, 72555 Metzingen (DE); Heinkel, Robert, 72581 Dettingen/Erms (DE)
(74) Vertreter: Patentanwälte Ruff, Wilhelm, Beier, Dauster & Partner mbB

(57) **Zusammenfassung**

2.1 Eine Vorrichtung zur Beikrautkontrolle an stationären Anlagen, insbesondere Solaranlagen, Zäunen oder sonstigen baulichen Einrichtungen, mit wenigstens einer Düse (2, 2a, 2b, 2c), wenigstens einer Einrichtung (3) zum Erwärmen von Wasser sowie einer Zuleitung (5) von der Einrichtung (3) zum Erwärmen von Wasser zu der Düse (2, 2a, 2b, 2c) sowie einer Steuervorrichtung (4) zum Freigeben und Absperren der Zuleitung (5) sowie ein Verfahren zur Beikrautkontrolle mit dieser Vorrichtung, ist bekannt.
2.2 Erfindungsgemäß sind die Düse und die Zuleitung (5) fest installiert und die Düse (2, 2a, 2b, 2c) erzeugt ein Tropfenspray (6), das Tropfen (7) mit einem mittleren Volumendurchmesser von mehr als 500 µm aufweist, insbesondere mehr als 1.000 µm.
2.3 Einsatz zur Beikrautkontrolle an stationären Anlagen.

## Beschreibung

Die Erfindung betrifft eine Vorrichtung zur Beikrautkontrolle an stationären Anlagen, insbesondere Solaranlagen, Zäunen und sonstigen baulichen Einrichtungen, mit wenigstens einer Düse, wenigstens einer Einrichtung zum Erwärmen von Wasser sowie einer Zuleitung von der Einrichtung zum Erwärmen von Wasser zu der Düse sowie einer Steuervorrichtung zum Freigeben und Absperren der Zuleitung sowie ein Verfahren zur Beikrautkontrolle mit dieser Vorrichtung.

Eine Vorrichtung zur thermischen Unkrautbekämpfung des Herstellers WAVE Weed Control bv. ist bekannt. Die bekannte Vorrichtung umfasst einen Solarspeicher für Warmwasser. Das vorgewärmte Wasser wird für eine weitere Erhitzung in eine geeignete Maschine betankt und auf 98°C erhitzt. Das Heißwasser wird als Wasserstrahl über eine Handlanze oder über ein an einem Kraftfahrzeug angebrachtes Dosiersystem ausgebracht.

Aus der Offenlegungsschrift DE 19729683 A1 ist eine mobile, an einem Kraftfahrzeug befindliche Vorrichtung zum Beseitigen von Wildkraut bekannt. Die bekannte Vorrichtung umfasst einen Vorratsbehälter für Wasser, eine an diesen angeschlossene Druckpumpe, eine Heizeinrichtung zum Erzeugen von Heißdampf und Düsen zum Aufsprühen von Heißdampf auf die Oberfläche. Das Wasser wird in der als Durchlauferhitzer ausgebildeten Heizeinrichtung auf eine Temperatur zwischen 90°C und 140°C erhitzt, um Heißdampf zu erzeugen. Die Düsen sind an einem Verteilerrechen angeordnet. Der Heißdampf wird mit einer Temperatur von mindestens 140°C und einem Druck von mindestens 60 bar auf das Wildkraut aufgebracht.

Aufgabe der Erfindung ist es, eine Vorrichtung der eingangs genannten Art zu schaffen, die sich für eine stationäre Anwendung eignet.

Diese Aufgabe wird dadurch gelöst, dass die Düse und die Zuleitung fest installiert sind und dass die Düse ein Tropfenspray erzeugt, das Tropfen mit einem mittleren Volumendurchmesser von mehr als 500 µm aufweist, insbesondere mehr als 1.000 µm. Als mittlerer Volumendurchmesser (MVD) wird ein Tropfendurchmesser bezeichnet, der in der Mitte des Gesamtvolumens der Tropfen liegt oder das Gesamtvolumen der Tropfen in zwei gleich große Teile teilt. Dementsprechend besteht eine Hälfte des Gesamtvolumens aus Tropfen mit einem Durchmesser, der gleich groß oder größer ist als der mittlere Volumendurchmesser und die andere Hälfte aus Tropfen mit einem Durchmesser, der gleich groß oder kleiner ist als der mittlere Volumendurchmesser. Durch eine feste Installation der Düse und der Zuleitung kann auf einen Bediener verzichtet werden. Die Düsen sind dauerhaft dort angeordnet, wo Beikraut bekämpft werden soll. Die Steuervorrichtung kann sich an der Vorrichtung selbst befinden oder fernbetätigbar sein. Somit wird ein Personalaufwand für die Beikrautkontrolle minimiert und die Vorrichtung ist insbesondere für schlecht zugängliche Anlagen geeignet, beispielsweise Solaranlagen auf Dächern. Eine Tropfengröße ist so gewählt, dass Wassertropfen während einer zurückgelegten Wurfweite nicht unter eine vordefinierte Temperatur abkühlen und auf dem zu kontrollierenden Beikraut mit der Temperatur auftreffen, die zu einer wenigstens teilweisen Zerstörung des Beikrauts, insbesondere zu einer Denaturierung von Pflanzeneiweißen führt, jedoch keine Schäden an Anlagenteilen verursacht.

In Ausgestaltung der Erfindung stellt die Einrichtung zum Erwärmen Wasser mit einer Temperatur von 42°C bis 100°C bereit, vorzugsweise 85°C. Viele gängige Kunststoffe und auch vollständige Solarmodule sind in diesem Temperaturbereich beständig und nehmen auch bei wiederholter Einwirkung von 85 °C heißem Wasser keinen Schaden. Beispielsweise kommt es nicht zu Verformungen oder weiteren Alterungserscheinungen von Kunststoffteilen.

In weiterer Ausgestaltung der Erfindung wird die Einrichtung zum Erwärmen von Wasser mit flüssigen, festen oder gasförmigen Brennstoffen, mit elektrischer Energie und/oder Solarenergie betrieben. Vorteilhafterweise wird das Wasser mit Solarenergie vorgewärmt und/oder anschließend beispielsweise mit einer elektrischen, benzin-, erdgas- oder ölbetriebenen Heizanlage erhitzt. Ein Vorwärmen mit Solarenergie verbessert den Wirkungsgrad der Vorrichtung, ist umweltfreundlich und schont Ressourcen. Bei entsprechender Auslegung kann das Wasser auch ausschließlich mit Solarenergie erwärmt werden.

In weiterer Ausgestaltung weist die Einrichtung zum Erwärmen von Wasser einen stationären thermischen Solarkollektor auf. Vorteilhafterweise wird das zu erhitzende Wasser in dem thermischen Solarkollektor zur Verbesserung des Wirkungsgrades vorgewärmt.

In weiterer Ausgestaltung ist die Düse als Flachstrahldüse ausgebildet, wobei ein Flachstrahl insbesondere horizontal ausgerichtet ist. Vorteilhafterweise kann durch den Flachstrahl das zu kontrollierendes Beikraut auf einer definierten Höhe mit dem Tropfenspray benetzt werden. Somit wird ein Höhenwachstum des Beikrauts kontrolliert und das Beikraut wächst nicht wesentlich über die festgelegte Höhe hinaus. Weiterhin ist vorteilhaft, dass mittels des Flachstrahls eine relativ große Fläche mit dem Tropfenspray besprüht werden kann.

In weiterer Ausgestaltung weist die Düse ein Gehäuse mit einer Austrittskammer und einer Austrittsöffnung auf, wobei die Austrittsöffnung schlitzartig ausgebildet ist und in einer Umfangswand der Austrittskammer angeordnet ist. Durch die schlitzartig ausgebildete Austrittsöffnung kann ein breites und flaches Strahlbild des Flachstrahls mit großen Tropfen erzeugt werden.

In weiterer Ausgestaltung der Erfindung weist die Düse ein Gehäuse mit einer Austrittsöffnung und einem Prallteller auf, wobei der Prallteller in Austrittsrichtung gesehen stromabwärts der Austrittsöffnung angeordnet ist. Dadurch ergibt sich dabei eine einfache und robuste Düsenkonstruktion, die wenig anfällig für Verschmutzungen ist. Zudem kann ein Sprühwinkel von 360 ° realisiert werden. Somit bedarf es nur einer geringen Anzahl von Düsen, um eine große Fläche mit dem Tropfenspray zu besprühen.

In weiterer Ausgestaltung der Erfindung ist der Prallteller im rechten Winkel zu einer Mittellängsachse der Austrittsöffnung angeordnet. Dadurch ergibt sich eine gleichmäßige Verteilung des Wasserstrahls an einer Oberfläche des Pralltellers. Der Prallteller kann von unten oder von oben angesprüht werden. Dabei kann die Düse hängend oder stehend angeordnet sein.

In weiterer Ausgestaltung ist der Prallteller in einer Gebrauchsposition der Vorrichtung oberhalb der Ausgangsöffnung angeordnet. Somit wird der Prallteller von unten angesprüht und der Sprühstrahl wird an einer Unterseite des Pralltellers horizontal verteilt. Vorteilhafterweise ergibt sich daraus, dass eine starre Heißwasserleitung zugleich als Gestell für die stehende Düse genutzt werden kann, um diese in der benötigten Höhe zu positionieren.

In weiterer Ausgestaltung der Erfindung weist die Düse mehrere an einer gekrümmten Fläche angeordnete Austrittsöffnungen auf. Vorteilhaftweiser kann über die Auslegung der gekrümmten Fläche und eine Verteilung der Austrittsöffnungen das Strahlbild angepasst werden.

In weiterer Ausgestaltung stellt die Düse eine maximale Wurfweite der Tropfen von 1.000 mm bis 1.500 mm bereit, insbesondere 1.300 mm. Somit kann auch eine Fläche unterhalb von großen Solarmodulen flächendeckend mit den Tropfen besprüht werden.

In weiterer Ausgestaltung ist die Düse oberhalb einer Bodenfläche angeordnet und erzeugt unmittelbar stromabwärts der Düsen einen im Wesentlichen horizontal ausgerichteten Tropfenstrahl, wobei die Austrittsöffnung 100 mm bis 500 mm über der Bodenfläche, insbesondere 200 mm über der Bodenfläche, angeordnet ist. Vorteilhafterweise kann somit die benötigte Wurfweite der Tropfen erreicht werden.

Die Aufgabe wird weiterhin gelöst durch ein Verfahren zur Beikrautkontrolle an stationären Anlagen, insbesondere Solaranlagen. Da insbesondere Solaranlagen auf Dächer meist nahe an der Bodenfläche des Dachs montiert sind, ist darunter wenig Raum vorhanden, um das Beikraut mit mobilen Vorrichtungen zu kontrollieren. Wenn zudem eine Dachbegrünung vorgegeben ist, darf das Beikraut nicht vernichtet werden. So kann vorteilhafterweise ein Beikrautbewuchs in dem Sinne kontrolliert werden, dass die Dachbegrünung erhalten bleibt, das Beikraut sich jedoch nicht über Sonnenkollektorflächen der Solaranlage erstreckt und diese beschattet.

In Ausgestaltung des Verfahrens wird Wasser auf 42 °C bis 100 °C erwärmt, insbesondere auf 85 °C. In diesem Temperaturbereich werden die Solarmodule nicht beschädigt. Das Beikraut wird bei einem Auftreffen von Heißwasser mit 85 °C geschädigt und an einem weiteren Wachstum gehindert.

In weiterer Ausgestaltung des Verfahrens wird ein Tropfenspray mit einem mittleren Volumendurchmesser von mehr als 500 µm erzeugt, insbesondere mehr als 1.000 µm. Vorteilhafterweise ist der mittlere Volumendurchmesser des Tropfensprays damit groß genug, dass das Tropfenspray mit ausreichender Wärmeenergie auf das Beikraut auftrifft und nicht während eines Austragens schon auf eine Temperatur abkühlt, bei welcher das Beikraut nicht mehr geschädigt wird.

In Ausgestaltung des Verfahrens wird das Tropfensprays in einer im Wesentlichen horizontalen Austragsrichtung 100 mm bis 500 mm über der Bodenfläche, insbesondere 200 mm über der Bodenfläche erzeugt. Mit einer horizontalen Austragsrichtung kann eine große Oberfläche des Beikrauts mit dem Tropfenspray behandelt werden. Weiterhin lässt sich über die horizontale Ausrichtung eine Behandlungshöhe des Beikrauts mit dem Heißwasser festlegen. Das Beikraut wird auf der Höhe des horizontalen Austrags von dem Heißwasser benetzt und wächst bei einer regelmäßigen Wiederholung der Behandlung nicht wesentlich über diese Höhe hinaus. Eine Behandlung des Beikrauts mit dem Heißwasser in einer Höhe von 200 mm über der Bodenfläche gewährleistet eine effektive Funktion der Solaranlage ohne Wirkungsgradverluste, die von einer Beschattung von Beikraut verursacht werden können, sowie eine meist ausreichende Dachbegrünung.

In Ausgestaltung des Verfahrens wird der Tropfen mit einer Wurfweite von 1.000 mm bis 1.500 mm ausgetragen, insbesondere 1.300 mm. Vorteilhafterweise kann somit eine gesamte von dem Solarmodul überspannte Tiefe mit dem Heißwasser behandelt werden und das Höhenwachstum des Beikrauts über die gesamte Tiefe des Solarmoduls kontrolliert werden.

In Ausgestaltung des Verfahrens wird eine Wassermenge von 1 l/m² bis 2 l/m² ausgetragen, bevorzugt 1,6 l/m². Die Wassermenge von 1,6 l/m² während einer Behandlung ist ausreichend, um das Beikraut wirksam zu kontrollieren. Eine Behandlung dauert wenige Minuten oder Sekunden. In dieser Zeit wird die Wassermenge ausgetragen, die in etwa einer Stunde Nieselregen entspricht. Somit ist ein Versickern oder Ableiten des Wassers unproblematisch möglich.

In Ausgestaltung des Verfahrens wird ein Beikraut mit den Tropfen seitlich besprüht. Das Beikraut kann durch ein seitliches Auftreffen des Heißwassers in seinem Höhenwachstum kontrolliert werden, ohne das Beikraut komplett zu zerstören. Das Beikraut wird auf der Höhe geschädigt, auf welcher das Heißwasser auftrifft, und der Bereich oberhalb des Auftreffens stirbt ab. Der Bereich unterhalb des Auftreffens des Heißwassers bleibt relativ unbeschadet. Wenn eine Begrünung gewünscht oder vorgegeben ist, kann ein unkontrolliertes Höhenwachstum von Beikraut somit reguliert werden.

In Ausgestaltung des Verfahrens wird das Verfahren in einem zeitlichen Abstand von 14 Tagen bis 28 Tagen wiederholt, insbesondere 21 Tagen. In Abhängigkeit einer Wachstumsgeschwindigkeit des Beikrauts können die Intervalle für die Behandlung des Beikrauts mit Heißwasser variiert werden. Es hat sich gezeigt, dass eine regelmäßige Behandlung des Beikrauts in einem Abstand von 21 Tagen gute Resultate erzielt und das Höhenwachstum ausreichend reguliert.

Weitere Merkmale und Vorteile der Erfindung ergeben sich aus den Ansprüchen und der folgenden Beschreibung von bevorzugten Ausführungsformen der Erfindung im Zusammenhang mit den Zeichnungen. Einzelmerkmale der beschriebenen oder gezeigten Ausführungsformen lassen sich dabei in beliebiger Weise miteinander kombinieren, ohne den Rahmen der Erfindung zu überschreiten. In den Zeichnungen zeigen:
- Fig. 1: eine schematische Darstellung einer erfindungsgemäßen Vorrichtung zur Beikrautkontrolle,
- Fig. 2: eine schematische Darstellung einer Solaranlage mit einer ersten Ausführungsform einer erfindungsgemäßen Vorrichtung mit Fächerdüsen,
- Fig. 3: eine schematische Draufsicht auf die in Fig. 2 gezeigte Fächerdüse,
- Fig. 4: eine schematische Darstellung einer Solaranlage mit einer zweiten Ausführungsform einer erfindungsgemäßen Vorrichtung mit einer Pralltellerdüse,
- Fig. 5: eine Teilschnittansicht der in Fig. 4 gezeigten Pralltellerdüse,
- Fig. 6: eine schematische Darstellung einer Solaranlage mit einer dritten Ausführungsform einer erfindungsgemäßen Vorrichtung mit Flachstrahldüsen und
- Fig. 7: eine Teilschnittansicht der in Fig. 6 gezeigten Flachstrahldüse.

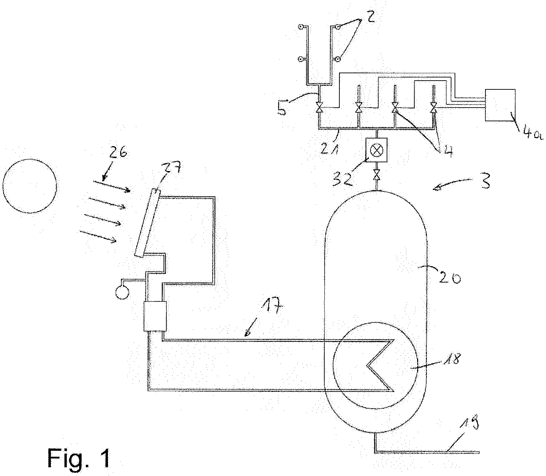

Eine Vorrichtung zur Beikrautkontrolle weist gemäß Fig. 1 einen thermischen Solarkollektor 27 auf. Ein Wärmeträgerkreislauf 17 verbindet den thermischen Solarkollektor 27 mit einem Wärmetauscher 18, welcher im Wärmeaustausch mit einem Wasserspeicher 20 steht. Über eine Kaltwasserzuleitung 19 wird dem Wärmetauscher 18 zu erwärmendes Wasser zugeführt. Von dem Wärmetauscher 18 vorgewärmtes Wasser wird in einem Erhitzer 32 auf eine Austragstemperatur von 85 °C erhitzt und kann über eine Heißwasserleitung 21 entnommen werden. In einem Bereich der Heißwasserleitung 21 sind Ventile 4 angeordnet. Mittels der Ventile 4 lässt sich ein Heißwasserzufluss zu den Düsen 2 öffnen oder schließen. Ein Öffnen und Schließen kann sowohl händisch an einer Solaranlage vorgenommen werden als auch über eine Steuervorrichtung 4a. Die Düsen 2 sind unterhalb von in der Fig. 1 nicht dargestellten Solarkollektoren 8 angeordnet.

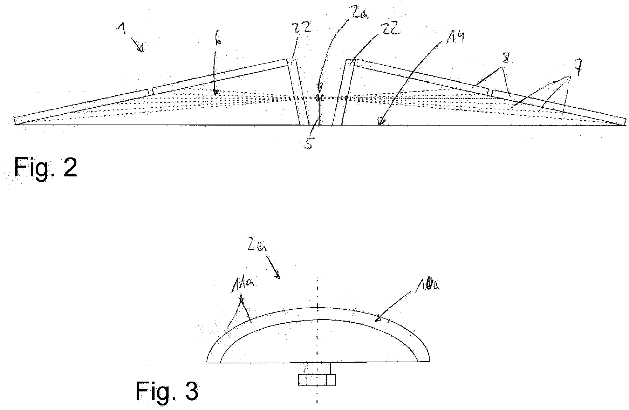

Die Solaranlage 1 weist, wie in Fig. 2 gezeigt, in bekannter Weise ein Basisgestell 22 auf, an welchem die Solarkollektoren 8 angeordnet sind. Das Basisgestell 22 steht mit einer Unterseite auf einer Bodenfläche 14 auf. Die Bodenfläche 14 kann beispielsweise ein Dach eines Gebäudes sein. Als Bodenfläche 14 gilt hier ein horizontaler Bereich auf einem Niveau einer Aufstandfläche des Basisgestells 22. Unterhalb der Solarkollektoren 8 kann gewollt oder ungewollt ein Beikrautbewuchs erfolgen. Die Beikrautkontrolle unterhalb der Solarkollektoren 8 mit mobilen Vorrichtungen zur Beikrautkontrolle ist aufgrund des dort herrschenden beengten Raumangebotes schwierig zu realisieren. Stehen mehrere Solarkollektoren 8 dicht an dicht, kann ein Erreichen eines Beikrautbewuchses mit der mobilen Vorrichtung unmöglich sein.

Unterhalb der Solarkollektoren 8 sind die Düsen 2a angeordnet. Die Düsen 2a sind mit einer Zuleitung 5 verbunden, welche starr oder flexibel ausgebildet sein kann. Im dargestellten Ausführungsbeispiel ist die Zuleitung 5 starr ausgebildet. Es handelt sich dabei beispielsweise um Stahl- oder Kunststoffleitungen, an welchen die Düsen 2a befestigt sind. In der Fig. 2 sind zwei als Fächerdüsen ausgebildete Düsen 2a gezeigt, die um 180 ° versetzt zueinander an der Zuleitung 5 angeordnet sind. Dabei sind Austrittsöffnungen 11a der Düsen 2a derart orientiert, dass jeweils ein von der Düse 2a abgegebenes Tropfenspray 6 in einen Bereich unterhalb des jeweiligen Solarkollektors 8 abgegeben wird. Das Tropfenspray 6 trifft seitlich auf das Beikraut auf und das Beikraut wird in einem Bereich des auftreffenden Tropfensprays 6 geschädigt. Durch Heißwasser wird Pflanzeneiweiß des Beikrauts zerstört und das Beikraut stirbt in diesem Bereich ab. Ein Bereich des Beikrauts unterhalb eines geschädigten Bereichs bleibt erhalten.

Die Solarkollektoren 8 können sowohl Photovoltaikanlagen als auch thermische Solarkollektoren sein. Die Solarkollektoren 8 können sowohl statisch als auch dynamisch angeordnet und motorisch angetrieben sein, um einem Sonnenverlauf zu folgen. Die Solarkollektoren 8 sind, wie in der Figur 2 dargestellt, schräg aufgestellt. Ein Bereich eines jeweiligen Solarkollektors 8 ist in Bodennähe angeordnet und ein gegenüberliegender Bereich wird von dem Basisgestell 22 gehalten. Die Solarkollektoren 8 weisen jeweils gegen Osten oder gegen Westen, um eine größtmögliche Sonnenausbeute zu gewährleisten. Dabei sind jeweils ein nach Osten und ein nach Westen ausgerichteter Solarkollektor 8 gemeinsam an einem Basisgestell 22 angeordnet.

Die in der Fig. 3 gezeigte Düse 2a weist einen gekrümmten Düsenkörper auf. In einem Umfangsbereich weist sie mehrere Austrittsöffnungen 11a auf, die hier strichpunktiert angedeutet sind. Die Düse 2a ist als Fächerdüse ausgebildet und erzeugt somit ein fächerartiges Strahlbild. Den Austrittsöffnungen 11a gegenüberliegend ist ein Gewindeanschluss angeordnet, mittels dessen die Düse 2a mit der Zuleitung 5 verbunden werden kann. Der Gewindeanschluss ist hier als eine Überwurfmutter ausgeführt, um eine Winkeleinstellung der Düse 2a zu ermöglichen. Die Düse 2a erzeugt Tropfen 7 mit einer Tropfengröße zwischen 500 µm und 1.000 µm oder sogar noch größere Tropfen.

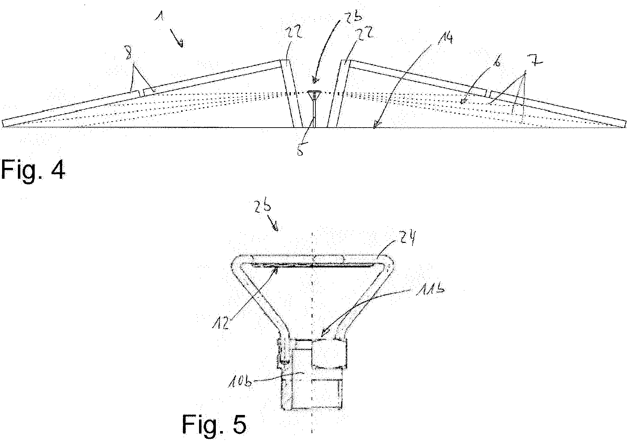

Fig. 4 zeigt eine Solaranlage mit einer Vorrichtung zur Beikrautkontrolle wie in Fig. 2 beschrieben, jedoch weichen die Düse 2b von den in der Fig. 2 gezeigten Düsen 2a ab. In Fig. 4 ist eine Pralltellerdüse dargestellt.

In der Fig. 5 ist die Pralltellerdüse 2b dargestellt wie sie auch in der Fig. 4 gezeigt ist. Die Pralltellerdüse 2b kann das Tropfenspray 6 in einem Winkel von 360 ° unterhalb der Solarkollektoren 8 verteilen. Der Prallteller 12 ist oberhalb einer Austrittsöffnung 11 b ausgebildet. Ein Prallteller 12 ist ein rundes Prallblech, welches stromabwärts der Austrittsöffnung 11 b mit einem trapezförmigen Bügel 24 an einem Düsengehäuse befestigt ist. Die Düse 2b weist eine Sechskant-Schlüsselfläche an einem äußeren Umfang und ein Muttergewinde an einem inneren Umfang auf. Das Muttergewinde der Düse 2b kann mit einem geeigneten Werkzeug mit einem Bolzengewinde der Zuleitung 5 verschraubt werden. Die Düse 2b erzeugt Tropfen 7 mit einer Tropfengröße zwischen 500 µm und 1.000 µm oder sogar noch größere Tropfen.

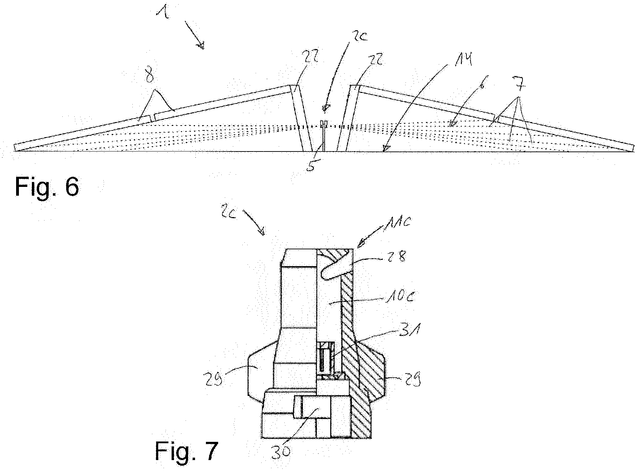

Fig. 6 zeigt eine Solaranlage mit einer Vorrichtung zur Beikrautkontrolle wie in der Fig. 2 beschrieben, jedoch weichen die Düse 2c von den in der Fig. 2 gezeigten Düsen 2a ab. In Fig. 6 sind die Düsen 2c als Flachstrahldüsen ausgebildet. Es sind zwei geschlitzte Düsen 2c vorgesehen, die um 180 ° versetzt zueinander an einer Zuleitung 5 angeordnet sind. Die Schlitze 28 sind jeweils in Richtung eines Bereichs unterhalb der Solarkollektoren 8 orientiert und das Tropfenspray 6 wird entsprechend unter die Solarkollektoren 8 abgegeben.

In Fig. 7 ist eine der Düsen 2c gezeigt, wie sie auch in der Fig. 6 dargestellt sind, deren Austrittsöffnung 11 c schlitzartig ausgebildet und in einer Umfangswand der Austrittskammer 10c angeordnet ist. In einer Betrachtungsebene der Fig. 7 in einem rechten, oberen Bereich ist ein Schlitz 28 gezeigt, von welchem das von dem Erhitzer 32 erhitzte Wasser, also Heißwasser, aus der Düse 2c abgegeben wird. Der Düsenkörper ist ein abgesetzter Zylinder, der zusätzlich zwei radial abragende Flügel 29 aufweist, die einem Bediener als eine Handhabe dienen. Mittels der Flügel 29 lässt sich die Düse 2c händisch mit der Zuleitung 5 verbinden. In einem unteren Bereich des Düsenkörpers ist eine wendelförmige Nutstruktur 30 gezeigt. Die Nutstruktur 30 ist Teil eines Bajonettverschlusses, mit dem die Düse 2c und die Zuleitung 5 miteinander verbunden werden können. In einem Inneren der Düse 2c ist eine topfförmige Leitvorrichtung 31 mit axialen Durchlassöffnungen eingelassen, die das zugeführte Wasser verwirbelt und eine Tropfenbildung begünstigt. Die Düse 2c erzeugt Tropfen 7 mit einer Tropfengröße zwischen 500 µm und 1.000 µm und wird auch als Flüssigdüngerdüse verwendet.

Um das Beikraut mit dem erfindungsgemäßen Verfahren zu kontrollieren, also nicht wesentlich über eine vordefinierte Höhe hinaus wachsen zu lassen, wird, siehe Fig. 1, über die Kaltwasserleitung 19 Leitungswasser oder aufbereitetes Regenwasser in den Wasserspeicher 20 eingefüllt. In dem thermischen Solarkollektor 27 wird ein Wärmeträger, wie beispielsweise ein Thermoöl oder Wasser, von einer Sonneneinstrahlung 26 erwärmt. Der erwärmte Wärmeträger wird durch den Wärmetauscher 18 geleitet. In dem Wärmetauscher 18 wird die Wärmeenergie des Wärmeträgers an Wasser im Wasserspeicher 20 übergeben und dieses somit vorgewärmt. Wenn Beikraut besprüht werden soll, wird das vorgewärmte Wasser durch den Erhitzer 32 auf 85 °C erhitzt und über die Düsen 2a, 2b, 2c ausgetragen. Eine Abgabe des Heißwassers geschieht auf einer Höhe von ca. 200 mm oberhalb der Bodenfläche in Form des Tropfensprays 6 mit einer Tropfengröße zwischen 500 µm und 1.000 µm. Auf dieser Höhe wird das Beikraut von dem Heißwasser benetzt. Die Tropfen 7 werden im Wesentlichen horizontal ausgetragen und treffen seitlich auf das Beikraut auf, wobei durch die hohe Temperatur der auftreffenden Tropfen 7 das Pflanzeneiweiß denaturiert, die Pflanze im Bereich des Auftreffens des Heißwassers geschädigt und somit an einem weiteren Höhenwachstum gehindert wird. Die Wurfweite der Tropfen beträgt 1.300 mm, dabei wird pro m² der Bodenfläche ein Heißwasservolumen von etwa 1,6 I ausgebracht. Das Verfahren und speziell das Besprühen des Beikrauts mit erwärmten Wasser wird in einem zeitlichen Abstand von etwa 21 Tagen wiederholt, um das Höhenwachstum des Beikrauts zu regulieren.

## Patentansprüche

1. Vorrichtung zur Beikrautkontrolle an stationären Anlagen, insbesondere Solaranlagen (1), Zäunen oder sonstigen baulichen Einrichtungen, mit wenigstens einer Düse (2, 2a, 2b, 2c), wenigstens einer Einrichtung (3) zum Erwärmen von Wasser sowie einer Zuleitung (5) von der Einrichtung (3) zum Erwärmen von Wasser zu der Düse (2, 2a, 2b, 2c) sowie einer Steuervorrichtung (4) zum Freigeben und Absperren der Zuleitung (5), **dadurch gekennzeichnet, dass** die Düse (2, 2a, 2b, 2c) und die Zuleitung (5) fest installiert sind, und dass die Düse (2, 2a, 2b, 2c) ein Tropfenspray (6) erzeugt, das Tropfen (7) mit einem mittleren Volumendurchmesser von mehr als 500 µm aufweist, insbesondere mehr als 1.000 µm.

2. Vorrichtung nach Anspruch 1, **dadurch gekennzeichnet, dass** die Einrichtung (3) zum Erwärmen von Wasser Wasser mit einer Temperatur von 42 °C bis 100 °C bereitstellt, vorzugsweise 85 °C.

3. Vorrichtung nach Anspruch 1 oder 2, **dadurch gekennzeichnet, dass** die Einrichtung (3) zum Erwärmen von Wasser mit flüssigen, festen oder gasförmigen Brennstoffen, mit elektrischer Energie und/oder Solarenergie betrieben wird.

4. Vorrichtung nach Anspruch 3, **dadurch gekennzeichnet, dass** die Einrichtung (3) zum Erwärmen von Wasser einen stationären thermischen Solarkollektor (27) aufweist.

5. Vorrichtung nach einem der vorhergehenden Ansprüche, **dadurch gekennzeichnet, dass** die Düse (2, 2a, 2b, 2c) als Flachstrahldüse ausgebildet ist, wobei der Flachstrahl insbesondere horizontal ausgerichtet ist.

6. Vorrichtung nach einem der vorhergehenden Ansprüche, **dadurch gekennzeichnet, dass** die Düse (2c) ein Gehäuse mit einer Austrittskammer (10c) und einer Austrittsöffnung (11 c) aufweist, wobei die Austrittsöffnung (11 c) schlitzartig ausgebildet und in einer Umfangswand der Austrittskammer (10c) angeordnet ist.

7. Vorrichtung nach einem der Ansprüche 1 bis 6, **dadurch gekennzeichnet, dass** die Düse (2b) ein Gehäuse mit einer Austrittsöffnung (11b) und einen Prallteller (12) aufweist, wobei der Prallteller (12) in Austrittsrichtung gesehen stromabwärts der Austrittsöffnung (11 b) angeordnet ist.

8. Vorrichtung nach Anspruch 7, **dadurch gekennzeichnet, dass** der Prallteller (12) im rechtem Winkel zu einer Mittellängsachse der Austrittsöffnung (11 b) angeordnet ist.

9. Vorrichtung nach Anspruch 6 oder 7, **dadurch gekennzeichnet, dass** der Prallteller (12) in einer Gebrauchsposition der Vorrichtung oberhalb der Austrittsöffnung (11b) angeordnet ist.

10. Vorrichtung nach Anspruch 6 oder 7, **dadurch gekennzeichnet, dass** die Düse (2a) mehrere an einer gekrümmten Fläche angeordneten Austrittsöffnungen (11a) aufweist.

11. Vorrichtung nach einem der vorhergehenden Ansprüche, **dadurch gekennzeichnet, dass** die Düse (2, 2a, 2b, 2c) eine maximale Wurfweite der Tropfen (7) von 1.000 mm bis 1.500 mm bereitstellt, insbesondere 1.300 mm.

12. Vorrichtung nach einem der vorhergehenden Ansprüche, **dadurch gekennzeichnet, dass** die Düse (2, 2a, 2b, 2c) oberhalb einer Bodenoberfläche (14) angeordnet ist und einen unmittelbar an der Düse (2, 2a, 2b, 2c) im Wesentlichen horizontal ausgerichteten Tropfenstrahl erzeugt, wobei die Düse (2, 2a, 2b, 2c) 100 mm bis 500 mm über der Bodenfläche (14), insbesondere 200 mm über der Bodenfläche (14) angeordnet ist.

13. Verfahren zur Beikrautkontrolle an stationären Anlagen, insbesondere Solaranlagen, mit einer Vorrichtung nach einem der vorstehenden Ansprüche, **gekennzeichnet durch** ein Erwärmen von Wasser auf 42 °C bis 100 °C, insbesondere 85 °C.

14. Verfahren nach Anspruch 13, **gekennzeichnet durch** ein Erzeugen eines Tropfensprays (6) mit einem mittleren Volumendurchmesser von mehr als 500 µm, insbesondere mehr als 1.000 µm.

15. Verfahren nach Anspruch 13 oder 14, **gekennzeichnet durch** ein Erzeugen des Tropfensprays (6) in einer im Wesentlichen horizontalen Austragsrichtung 100 mm bis 500 mm über der Bodenfläche (14), insbesondere 200 mm über der Bodenfläche (14).

16. Verfahren nach Anspruch 13 bis 15, **gekennzeichnet durch** das Erzeugen der Tropfen (7) mit einer Wurfweite von 1.000 mm bis 1.500 mm, insbesondere 1.300 mm.

17. Verfahren nach einem der Ansprüche 13 bis 16, **gekennzeichnet durch** einen Austrag einer Wassermenge von 1l/m² bis 2l/m², bevorzugt 1,6 l/m².

18. Verfahren nach einem der Ansprüche 13 bis 17, **gekennzeichnet durch** ein seitliches Besprühen von Beikraut mit den Tropfen (7).

19. Verfahren nach einem der Ansprüche 13 bis 18, **gekennzeichnet durch** eine Wiederholung des Verfahrens in einem zeitlichen Abstand von 14 Tagen bis 28 Tagen, insbesondere 21 Tagen.
